# EUROPEAN PATENT APPLICATION

(11) **EP 4 450 234 A1**
(43) Date of publication of application: **23.10.2024**
(21) Application number: 22907821.7
(22) Date of filing: 06.12.2022
(51) Int. Cl.: B25J 9/16, B25J 5/00, B25J 11/00, B25J 13/08, B25J 19/02

(54) **METHOD BY WHICH MOBILE ROBOT CROSSES CROSSWALK, AND MOBILE ROBOT**

(30) Priority: 14.12.2021 KR 20210178809
(71) Applicant: Woowa Brothers Co., Ltd., Seoul 05544 (KR)
(72) Inventor: LIM, Byeong Hak, Seongnam-si Gyeonggi-do 13355 (KR)
(74) Representative: Flügel Preissner Schober Seidel
(86) International application number: PCT/KR2022/019673
(87) International publication number: WO 2023/113352

(57) **Abstract**

A method by which a mobile robot crosses a crosswalk, and the mobile robot are disclosed. The method by which a mobile robot crosses a crosswalk, according to an embodiment of the present invention, comprises steps in which the mobile robot: detects the crosswalk; detects the movement of at least one pedestrian within a predetermined range from the crosswalk; determines, on the basis of the detected movement of the at least one pedestrian, whether the traffic lights of the crosswalk indicate a walking signal; and crosses the crosswalk if it is determined that the traffic lights indicate the walking signal.

## Description

### Technical Field

The present disclosure relates to a crosswalk crossing method by a mobile robot and the mobile robot, and more specifically, to a technical idea which is capable of reducing unnecessary signal waiting time and improving efficiency of a mobile robot, especially when the mobile robot driving toward a destination needs to cross a crosswalk outdoors by enabling it to determine whether a traffic light at the crosswalk has changed to a walking signal based on motions of surrounding pedestrians even in situations where the traffic light at the crosswalk is not detected.

### Background Art

With the development of autonomous driving and robot technology, research is being actively conducted to serve food in stores such as restaurants with serving robots, as well as to deliver food or other delivery items (e.g., parcel items, etc.) with mobile robots capable of autonomous driving.

In the case of a conventional autonomous driving mobile robot, a method of performing X2X communication to receive signal information from a traffic light by connecting to a communication network of a traffic information control system, or recognizing whether a signal of the traffic light has changed by directly recognizing the traffic light through a camera sensor system of the autonomous mobile robot itself is known.

However, in order to have the system necessary to perform X2X communication, there is a problem in that the manufacturing cost of the mobile robot increases rapidly, and in the case of simply recognizing the traffic light directly, there is a problem in that it is not easy to recognize the traffic light due to pedestrians, vehicles, or other obstacles due to the nature of the mobile robot's camera or sensor located at a relatively low height.

Therefore, conventionally, if X2X communication is not performed, a problem may occur in which the mobile robot cannot cross the crosswalk until it directly recognizes the traffic light, and the waiting time increases, thereby increasing the travel time (delivery time).

In addition, in the case of the conventional method in which mobile robots directly recognize traffic lights, due to sensor limitations such as the camera sensor's angle of view or resolution, or image sensor saturation state, there are often cases where traffic lights and/or signal changes in traffic lights cannot be properly recognized, making it impossible to cross the crosswalk.

Even if the mobile robot correctly recognizes the walking signal from the traffic light, it is difficult to know whether there is enough time left for the mobile robot to cross the crosswalk before the walking signal ends, so conventionally, an algorithm is typically implemented so that a mobile robot recognizes a traffic light and then starts crossing the crosswalk when the traffic light changes from a stop signal (red light) to a walking signal (green light).

As in the case where a pedestrian moves in front of the mobile robot and blocks the traffic light, if the mobile robot does not recognize the signal change point of traffic light, it cannot start crossing the crosswalk and must wait for the next signal change, so there is a problem that it takes unnecessary time to cross a single crosswalk, which may greatly reduce efficiency.

Therefore, in situations where the mobile robot cannot detect traffic lights at a crosswalk, rather than just waiting until a traffic light is detected, a technical idea is needed that can easily determine whether the traffic light will change to the walking signal depending on the surrounding environment, for example, the motion of surrounding pedestrians.

### [Prior Art Document]

- Patent Document: Korean Patent Application No. 10-2019-0120039 titled "Moving robot"

### Disclosure of the Invention

### Technical Goals

A technical object to be achieved by the present disclosure is to provide a technical idea to enable a mobile robot to cross a crosswalk smoothly by indirectly recognizing signal changes in a traffic light through the surrounding environment, for example, motions of surrounding pedestrians, even when the mobile robot does not directly recognize the traffic light and/or signals of the traffic light at the crosswalk.

### Technical Solutions

A crosswalk crossing method by a mobile robot in accordance with an embodiment of the present disclosure for achieving the above technical objects may include detecting, by the mobile robot, a crosswalk, detecting, by the mobile robot, a motion of at least one pedestrian within a predetermined range from the crosswalk, determining, by the mobile robot, whether a traffic light of the crosswalk is a walking signal based on the detected motion of the at least one pedestrian, and when it is determined that the traffic light is the walking signal, crossing, by the mobile robot, the crosswalk.

In addition, the crosswalk crossing method may further include detecting, by the mobile robot, a traffic light at the crosswalk, wherein a motion of a pedestrian may be detected within a predetermined range centered on the crosswalk by the mobile robot, when no traffic light is detected.

In addition, the determining of, by the mobile robot, whether the traffic light of the crosswalk is the walking signal, may include detecting, by the mobile robot, whether at least one pedestrian who has been stationary starts to move, and when the at least one pedestrian starts to move, determining, by the mobile robot, that the traffic light is the walking signal.

In addition, the detecting of, by the mobile robot, whether the at least one pedestrian who has been stationary starts to move, may include detecting, by the mobile robot, whether the at least one pedestrian moves along a crosswalk direction.

In addition, the determining of, by the mobile robot, whether the traffic light of the crosswalk is the walking signal, may include detecting, by the mobile robot, whether a plurality of pedestrians start to move, and determining, by the mobile robot, when the movement of the plurality of pedestrians meets a predetermined standard, that the traffic light is the walking signal.

In addition, the determining of, by the mobile robot, when the movement of the plurality of pedestrians meets the predetermined standard, that the traffic light is the walking signal may include determining, by the mobile robot, when pedestrians of a predetermined standard number or more start to move, that the traffic light is the walking signal, or determining, by the mobile robot, when a proportion of pedestrians starting to move among a plurality of pedestrians is above a certain level, that the traffic light is the walking signal.

In addition, the crossing of, by the mobile robot, the crosswalk, may include stopping, by the mobile robot, crossing the crosswalk when the mobile robot fails to enter the crosswalk within a predetermined time after it is determined that the traffic light is the walking signal, and waiting, by the mobile robot, for a next walking signal of the traffic light.

The method may be implemented by a computer program stored in a non-transitory computer-readable recording medium.

A mobile robot in accordance with an embodiment of the present disclosure for achieving the above technical objects may include a driving part for driving of the mobile robot, a controller for controlling driving of the driving part, a detecting part for detecting a crosswalk and a traffic light, and a motion detector for detecting a motion of a pedestrian, wherein the motion detector may be configured to, when the crosswalk is detected by the detecting part, detect a motion of at least one pedestrian within a predetermined range from the crosswalk, and the controller may be configured to determine whether a traffic light of the crosswalk is a walking signal based on the motion of the at least one pedestrian detected by the motion detector, and when it is determined that the traffic light is the walking signal, control the driving part to allow the mobile robot to cross the crosswalk.

In addition, the motion detector may be configured to detect whether at least one pedestrian who has been stationary starts to move, and the controller may be configured to, when at least one pedestrian starts to move, determine that the traffic light is the walking signal.

In addition, the motion detector may be configured to detect whether the at least one pedestrian detected by the motion detector moves along a crosswalk direction.

In addition, the motion detector may be configured to detect whether a plurality of pedestrians start to move, and the controller may be configured to, when the movement of the plurality of pedestrians detected by the motion detector meets a predetermined standard, determine that the traffic light is the walking signal.

In addition, the controller may be configured to, when pedestrians of a predetermined standard number or more start to move, determine that the traffic light is the walking signal, or when a proportion of pedestrians starting to move among a plurality of pedestrians is above a certain level, determine that the traffic light is the walking signal.

In addition, the controller may be configured to, when the mobile robot fails to enter the crosswalk within a predetermined time after it is determined that the traffic light is the walking signal, control the driving part to stop crossing the crosswalk and wait for a next walking signal of the traffic light.

### Advantageous Effects

According to an embodiment of the present disclosure, in a situation where a mobile robot cannot detect a traffic light at a crosswalk, rather than just waiting for the traffic light to be detected, it is possible to easily determine whether the traffic light has changed to the walking signal depending on the surrounding environment, for example, the motion of surrounding pedestrians, thereby greatly improving the driving efficiency of the mobile robot.

### Brief Description of Drawings

In order to more fully understand the drawings cited in the detailed description of the present disclosure, a brief description of each drawing is provided.
FIG. 1 is a diagram for explaining a crosswalk crossing method by a mobile robot in accordance with an embodiment of the present disclosure.
FIG. 2 illustrates a schematic flow of a crosswalk crossing method by a mobile robot in accordance with an embodiment of the present disclosure.
FIG. 3 and FIG. 4 are diagrams for explaining a specific method of a crosswalk crossing method by a mobile robot in accordance with an embodiment of the present disclosure.
FIG. 5 illustrates a schematic configuration of a mobile robot in accordance with an embodiment of the present disclosure.

### Best Mode for Carrying Out the Invention

Since the present disclosure may apply various modifications and have various example embodiments, specific example embodiments will be illustrated in the drawings and described in detail in the detailed description. However, this is not intended to limit the present disclosure to specific embodiments, and it should be understood to include all modifications, equivalents, and substitutes included in the spirit and scope of the present disclosure. In describing the present invention, if it is determined that a detailed description of related known technologies may obscure the gist of the present disclosure, the detailed description will be omitted.

Terms such as first and second may be used to describe various components, but the components should not be limited by the terms. The terms are used only for the purpose of distinguishing one component from another.

The terms used in the present application are used only to describe a particular embodiment and are not intended to limit the present disclosure. Singular expressions include plural expressions unless the context clearly means otherwise.

In this specification, terms such as "include" or "have" are intended to designate the presence of features, numbers, steps, operations, components, parts, or combinations thereof described in the specification, and it should be understood that they do not preclude the possibility of the presence or addition of one or more other features, numbers, steps, operations, components, parts, or combinations thereof.

In addition, in the present specification, when one component 'transmits' data to another component, it means that the component may directly transmit the data to the other component, and that the data may be transmitted to the other component through at least one other component. Conversely, when one component 'directly transmits' data to another component, it means that the data is transmitted from the component to the other component without going through the other component.

Hereinafter, with reference to the accompanying drawings, the present disclosure will be described in detail centering on embodiments of the present disclosure. Like reference numerals in each figure indicate like members.

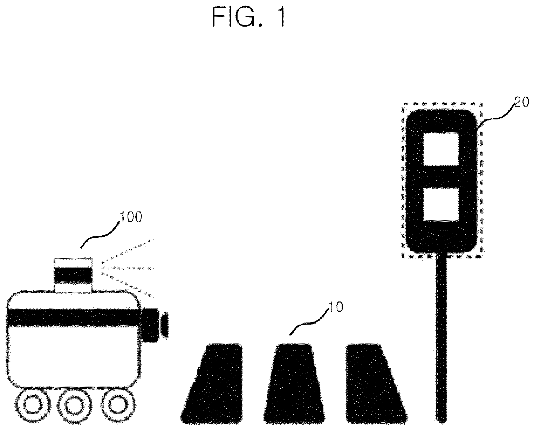

FIG. 1 is a diagram for explaining a crosswalk crossing method by a mobile robot in accordance with an embodiment of the present disclosure.

Referring to FIG. 1, a mobile robot 100 may be provided to implement a crosswalk crossing method by a mobile robot in accordance with an embodiment of the present disclosure.

The mobile robot 100 may refer to a robot capable of moving, including a driving part including driving means necessary for movement or driving. For example, the mobile robot 100 may be a robot that includes an autonomous driving function, sets a route according to the destination, and drives itself along the set route.

Hereinafter, in this specification, although the case where the mobile robot 100 is a delivery robot that loads a predetermined product and travels an outdoor route to deliver the product to a predetermined destination will be described as an example, the scope of the present disclosure is not necessarily limited thereto. For example, the mobile robot 100 may be implemented as a robot that drives indoors on its own and performs designated tasks for various purposes (e.g., serving, delivery, cleaning, patrolling, etc.). In this case, the technical idea of the present disclosure, which will be described later, may be applied in the same or similar manner to situations such as when the mobile robot 100 traverses an intersection or lobby in an indoor space and/or boarding an elevator.

In addition, the mobile robot 100 is equipped with a predetermined camera sensor system, and may detect and sense various objects such as obstacles, pedestrians, crosswalks, and/or traffic lights while driving from shooting information captured through a camera system and/or sensing information sensed by a sensor system. Since the technical idea of detecting a predetermined object from shooting information or sensing information is already widely known, further detailed description will be omitted in this specification.

The mobile robot 100 may pre-store map data for setting a route to the destination, or may obtain the map data from an external system. The external system may be a server of the entity that operates or manages the mobile robot 100.

Referring to the drawing again, the mobile robot 100 may detect a crosswalk 10 when it is necessary to cross a road on which a vehicle travels during a designated movement path.

In the case of a conventional autonomous driving mobile robot, a method of performing X2X communication to receive signal information from the traffic light by connecting to the communication network of a traffic information control system, or recognizing whether the traffic light signal has changed by directly recognizing the traffic light through a camera sensor system of the autonomous mobile robot itself is known.

However, as described above, in order to have the system necessary to perform X2X communication, there is a problem that the manufacturing cost of mobile robots increases rapidly, and in the case of simply recognizing traffic lights directly, there is a problem in that it is not easy to recognize traffic lights due to pedestrians, vehicles, or other obstacles due to the nature of the mobile robot's camera or sensor located at a relatively low height.

Therefore, conventionally, if X2X communication is not performed, a problem may occur in which the mobile robot cannot cross the crosswalk until it directly recognizes the traffic light, and the waiting time increases, thereby increasing the travel time (delivery time).

In addition, in the case of the conventional method in which mobile robots directly recognize traffic lights, due to sensor limitations such as the camera sensor's angle of view or resolution, or image sensor saturation state, there are often cases where traffic lights and/or signal changes in traffic lights cannot be properly recognized, making it impossible to cross the crosswalk.

Even if the mobile robot correctly recognizes the walking signal from the traffic light, it is difficult to know whether there is enough time left for the mobile robot to cross the crosswalk before the walking signal ends, so conventionally, an algorithm is typically implemented so that a mobile robot recognizes a traffic light and then starts crossing the crosswalk when the traffic light changes from a stop signal (red light) to a walking signal (green light).

As in the case where a pedestrian moves in front of the mobile robot and blocks the traffic light, if the mobile robot does not recognize the signal change point of traffic light, it cannot start crossing the crosswalk and must wait for the next signal change, so there is a problem that it takes unnecessary time to cross a single crosswalk, which may greatly reduce efficiency.

Accordingly, the present disclosure is intended to provide a technical idea to enable the mobile robot 100 to cross a crosswalk 10 smoothly by indirectly recognizing signal changes in a traffic light 20 through the surrounding environment, for example, the motion of surrounding pedestrians, even when the mobile robot 100 does not directly recognize the traffic light 20 and/or signals of the traffic light 20 at the crosswalk 10.

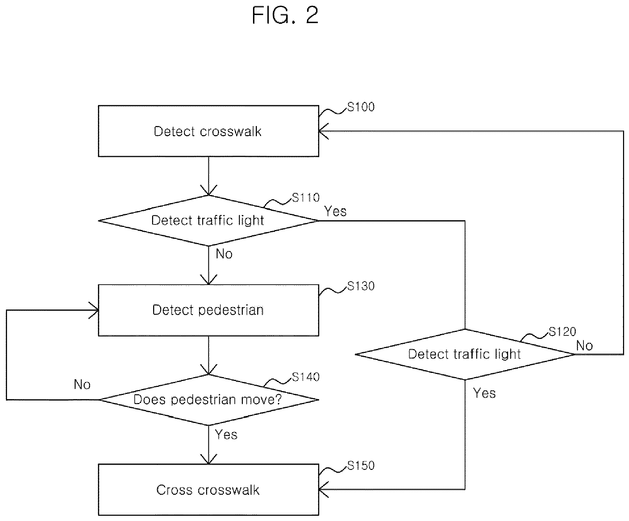

FIG. 2 illustrates a schematic flow of a crosswalk crossing method by a mobile robot in accordance with an embodiment of the present disclosure.

Referring to FIG. 2, in the crosswalk crossing method by a mobile robot in accordance with an embodiment of the present disclosure, the mobile robot 100 may detect the crosswalk 10 on its movement path (s100).

As described above, the mobile robot 100 may specify the location of the crosswalk 10 that it must cross and detect the crosswalk 10 through map data and its own location information. Alternatively, the mobile robot 100 may detect the crosswalk 10 through information captured and/or sensed through the camera sensor system provided therein. Depending on the implementation example, the mobile robot 100 may detect the crosswalk 10 that it must soon cross by using a combination of the two methods described above.

In any case, when the mobile robot 100 detects the crosswalk 10, it may detect the traffic light 20 corresponding to the detected crosswalk 10 (s110). Detection of this traffic light 20 may be performed by the camera sensor system described above.

The mobile robot 100, when the traffic light 20 is detected by the camera sensor system, may determine whether the signal of the traffic light 20 has changed (s120), and when the signal changes (e.g., changes from the stop signal to the walking signal), may cross the crosswalk (s150).

However, when the traffic light 20 is not detected, the mobile robot 100 may detect at least one pedestrian and/or the motion of at least one pedestrian within a predetermined range from the crosswalk 10 (s130). Hereinafter, in this specification, the fact that the mobile robot 100 detects the motion of a pedestrian may mean that the mobile robot 100 detects the presence of the surrounding pedestrian itself as well as detecting the motion (e.g., whether stationary, moving, etc.) of the pedestrian.

According to the technical idea of the present disclosure, the mobile robot 100 may determine whether the traffic light of the crosswalk 10 is the walking signal based on the detected motion of the pedestrian. In an embodiment, the mobile robot 100 may determine whether the pedestrian detected in step s130 starts to move (s140), and as a result of determination, when the movement of at least one pedestrian starts, determine that the traffic light is the walking signal, and cross the crosswalk 10.

When the mobile robot 100 cannot detect the traffic light 20, methods and/or standards for determining whether the traffic light 20 has changed to the walking signal may be set in various ways. Hereinafter, in this specification, the method based on the motion of pedestrians around the mobile robot 100 will be mainly explained.

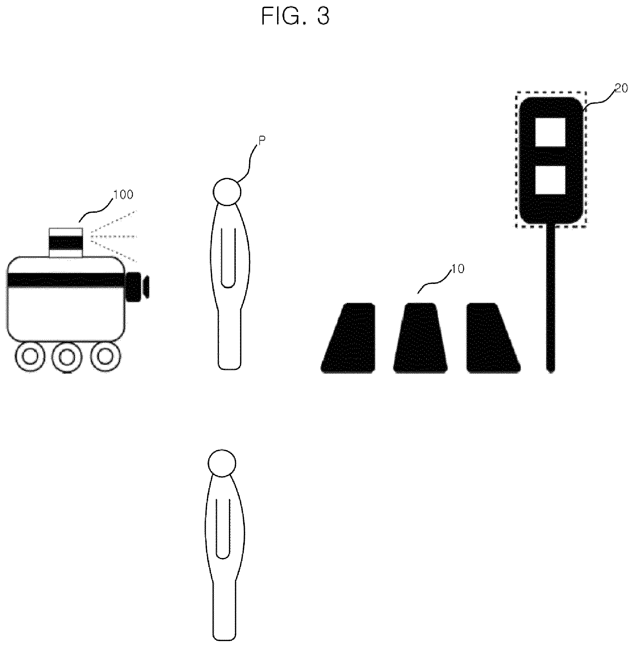

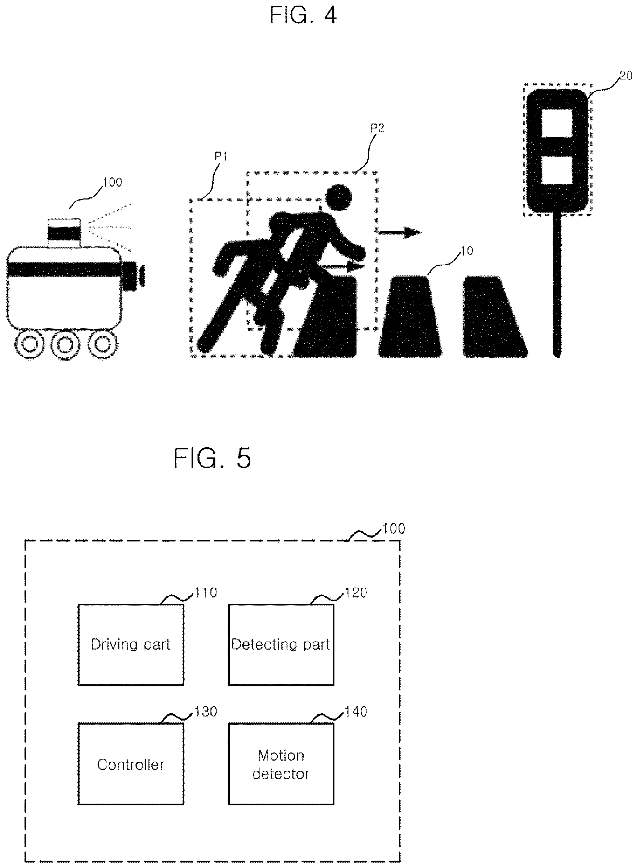

FIG. 3 and FIG. 4 are diagrams for explaining a specific method of a crosswalk crossing method by a mobile robot in accordance with an embodiment of the present disclosure.

First, referring to FIG. 3, as described above, the mobile robot 100 in accordance with an embodiment of the present disclosure may detect whether there is a crosswalk 10 on the path while driving and detect the traffic light 20 corresponding to the crosswalk 10.

However, generally, the mobile robot 100 senses or photographs the surrounding environment at a lower height than pedestrians.

As shown in the drawing, when the mobile robot 100 is located in front of the crosswalk 10, when a pedestrian (P) is standing in front of the mobile robot 100, the traffic light 20 may not be detected by the mobile robot 100 because it is obscured by the pedestrian (P).

If there are only one to two pedestrians in front of the crosswalk 10, the mobile robot 100 may detect the traffic light 20 while slightly changing its waiting position, but if there are many pedestrians (P) trying to cross the crosswalk 10, there is a very high possibility that the traffic light 20 will not be detected even if the mobile robot 100 changes its position in front of the crosswalk 10.

In addition, although not shown in the drawing, in addition to pedestrians (P), even when a vehicle that has stopped by encroaching on the crosswalk 10 is stopped in the sidewalk lane, it may interfere with the detection of the traffic light 20 by the mobile robot 100.

Therefore, as shown in FIG. 4, the mobile robot 100 in accordance with the technical idea of the present disclosure may, when the traffic light 20 is not detected at the detected crosswalk 10, detect the motion of at least one pedestrian (P1) and/or pedestrian (P2) within a predetermined range from the crosswalk 10, and determine whether the signal of the traffic light 20 has changed based on the detected movement of at least one pedestrian (P1) and/or pedestrian (P2).

Detection of a pedestrian (P) within a predetermined range from the detected crosswalk 10 by the mobile robot 100 may be to minimize determination errors caused by the motion of pedestrians (e.g., pedestrians passing by without crossing the crosswalk 10, or the like) other than the pedestrian (P) intended to cross the crosswalk 10. For example, the mobile robot 100 may only detect the motions of pedestrians (P) located within a certain distance in front of itself facing the crosswalk 10 at the detected crosswalk 10.

The pedestrian (P) intended to cross the crosswalk 10 stops and waits in front of the crosswalk 10 until the traffic light 20 changes to a walk signal, and then starts moving when the traffic light 20 changes to a walk signal. Therefore, when the traffic light 20 is not detected, the mobile robot 100 may detect the motion of the pedestrian (P) waiting in front of the crosswalk 10, determine that the signal of the traffic light 20 has changed at the time when the pedestrian who has been stationary starts moving to the crosswalk 10, and start crossing the crosswalk 10.

Meanwhile, even for the pedestrian (P) who has been stationary in front of the crosswalk 10, the case of moving cannot necessarily guarantee crossing the crosswalk 10. In addition, even if the pedestrian (P) moves in the direction of crossing the crosswalk 10, it cannot necessarily be confirmed that the signal of the traffic light 20 has changed to the walking signal.

Therefore, when the traffic light 20 is not detected, the mobile robot 100 may detect the motion of a plurality of pedestrians (e.g., P1, P2) and detect whether they start moving from a stationary state, while determining whether the traffic light 20 has changed to the walking signal depending on whether the motion (movement) of the plurality of pedestrians (e.g., P1, P2) meets a predetermined standard.

At the crosswalk 10 with the traffic light 20, there is a significantly higher possibility that the traffic light 20 may not be detected by the mobile robot 100 due to the plurality of pedestrians (e.g., P1, P2) rather than a single pedestrian (P), so it may be desirable for the mobile robot 100 to detect the motions of the plurality of pedestrians (e.g., P1, P2).

The standard by which the mobile robot 100 determines whether the signal of the traffic light 20 has changed according to the motions of the plurality of pedestrians (e.g., P1, P2) may be set in various ways.

In one embodiment, the mobile robot 100 may determine that the traffic light 20 has changed to the walking signal only when, among the plurality of pedestrians who have been stationary, a certain number or more of pedestrians start to move. For example, it often happens that, among the pedestrians waiting for the walking signal at the crosswalk 10, one or two pedestrians attempt to cross before the signal at the traffic light 20 changes to the walking signal, or anticipate the timing of a signal change and attempt to cross before the signal changes.

Therefore, the mobile robot 100 may pre-set a standard number of people, such as 3 or 5 people, and determine that the traffic light 20 has changed to the walking signal when it is detected that among the detected plurality of pedestrians (e.g., P1, P2), the standard number of pedestrians or more start to move.

Alternatively, among the plurality of pedestrians (e.g., P1, P2), when a certain proportion of pedestrians or more, rather than a set number of people, start moving, the mobile robot 100 may determine that the traffic light 20 has changed to the walking signal. For example, the mobile robot 100 may determine whether the walking signal of the traffic light 20 has changed when approximately 30% to 40% of the detected pedestrians start moving. The above figure may be one of the embodiments of the present disclosure, and the standard by which the mobile robot 100 determines whether the walking signal of the traffic light 20 has changed based on whether a certain proportion or more of pedestrians among the plurality of pedestrians (e.g., P1, P2) move may be set in various ways as needed.

Depending on the implementation example, the mobile robot 100 may determine whether the signal of the traffic light 20 has changed by further considering whether the motion of the detected pedestrians (e.g., P1, P2) is in the direction of crossing the crosswalk 10. As described above, since it cannot be assured that the pedestrian (P) who was standing in front of the crosswalk 10 will definitely cross the crosswalk, when it is detected that the stationary pedestrian (P) starts to move, it may further be determined whether the movement direction of the pedestrian (P) is the direction of crossing the crosswalk 10.

Meanwhile, although the drawings illustrate a case where the mobile robot 100, as described above, determines whether the traffic light 20 is the walking signal based on the motions of pedestrians (e.g., P1, P2) on the side where the mobile robot 100 is currently located at the crosswalk 10 that it intends to cross, according to the technical idea of the present disclosure, the mobile robot 100 may also determine whether the traffic light 20 has changed to the walking signal by detecting the motions of pedestrians located on the opposite side of the crosswalk 10, i.e., pedestrians moving towards the mobile robot 100 from the other side of the crosswalk 10.

For example, when the mobile robot 100 fails to detect the traffic light 20 at the crosswalk 10 for various reasons, it may detect pedestrians around the crosswalk 10 as described above. At this time, the mobile robot 100 may detect pedestrians located on the same side as itself at the crosswalk 10, as well as pedestrians on the opposite side of the crosswalk 10 it intends to cross, and as described above, when the stationary pedestrians start to move, may determine that the traffic light 20 has changed to the walking signal.

Although the traffic light 20 is generally located relatively high compared to pedestrians, the area to be detected is relatively small, so there is a possibility that detection will fail even if there is only a slight obstruction, but in the case of pedestrians located on the opposite side of the crosswalk 10, detection may be easier because their size is relatively larger than that of the traffic light 20. Therefore, if it is possible to detect pedestrians on the opposite side of the crosswalk 10, just like the motion of pedestrians (e.g., P1, P2) crossing the crosswalk 10 in the same direction as the mobile robot 100, the motion of pedestrians across the crosswalk 10 may also be used as a standard for determining whether the walking signal of the traffic light 20 has changed. In other words, according to the technical idea of the present disclosure, pedestrians who wish to cross the crosswalk 10 are not limited to the crossing direction and may be used as a standard for the mobile robot 100 to determine whether the traffic light 20 has changed to the walking signal.

Meanwhile, as described above, even if the mobile robot 100 determines whether the signal of the traffic light 20 has changed based on the motion of pedestrians (P) even in a situation where the traffic light 20 is not detected, entry into the crosswalk 10 may be delayed due to various reasons such as that there are a significant number of pedestrians waiting for the walking signal at the crosswalk 10 in front of the mobile robot 100.

In this case, when the mobile robot 100 enters the crosswalk 10 some time after the traffic light 20 changes to the walking signal, there is a risk that the signal of the traffic light 20 may change before the crossing of the crosswalk 10 is completed.

Therefore, if the mobile robot 100 fails to enter the crosswalk 10 within a predetermined time after it is determined that the traffic light 20 is the walking signal based on the motion of pedestrians P, it may stop crossing the crosswalk 10 and wait for the next walking signal of the traffic light 20.

The configuration of the mobile robot 100 for performing the above-described crosswalk crossing method by a mobile robot will be described with reference to FIG. 5.

FIG. 5 illustrates a schematic configuration of a mobile robot in accordance with an embodiment of the present disclosure.

Referring to FIG. 5, the mobile robot 100 in accordance with an embodiment of the present disclosure may include a driving part 110, a controller 120, a detecting part 120, and/or a motion detector 140.

The driving part 110 may refer to a driving means necessary for driving the mobile robot 100.

The controller 120 may control the operations or functions of the remaining components of the mobile robot 100 (e.g., the driving part 110, the detecting part 130, and/or the motion detector 140), and may control operations such as whether or not to drive the mobile robot 100 based on the results detected or sensed by the detecting part 130 and/or the motion detector 140.

The controller 120 may include a processor and a storage medium (or memory) to implement the functions defined in this specification. The processor may refer to a computing device capable of executing a predetermined program (software code), and implementation examples of the data processing device may be named by various names such as vendor mobile processor, microprocessor, CPU, single processor, multi-processor, GPU, etc., and may be implemented with one or more processors.

An average expert in the field of the present disclosure may easily infer that the processor may execute the program and perform data processing necessary for the technical idea of the present disclosure.

The memory may refer to a device in which a program for implementing the technical idea of the present disclosure is stored/installed. Depending on the implementation example, the memory may be divided into a plurality of different physical devices, and depending on the implementation example, a portion of the memory may exist inside the processor. The memory may be implemented as a hard disk, GPU, solid state disk (SSD), optical disk, random access memory (RAM), and/or various other types of storage media, depending on the implementation example, and if necessary, may be implemented in a removable manner in the memory.

An average expert in the field of the present disclosure may easily infer that the mobile robot 100 according to the technical idea of the present disclosure may be implemented by organically combining the program (or software) stored in the memory and the processor, and that in this specification, the functions and/or operations performed by the mobile robot 100 may be accomplished by executing the program by the processor.

The detecting part 130 and/or the motion detector 140 includes at least one camera and/or sensor (e.g., LiDAR sensor, infrared sensor, etc.), and may acquire image information and/or sensing information about the surrounding environment of the mobile robot 100.

In this way, the controller 120 may detect or sense the crosswalk 10, the traffic light 20, and/or the motion of pedestrians using the information acquired by the detecting part 130 and/or the motion detector 140, and using this, may determine whether the traffic light 20 has changed to the walking signal and control the driving part 110 so that the mobile robot 100 may cross the crosswalk 10.

Consequently, according to the technical idea of the present disclosure, when the mobile robot 100 performing autonomous driving and moving to the destination needs to cross the crosswalk 10, in a situation where the traffic light 20 of the crosswalk 10 cannot be detected, rather than waiting blindly until the traffic light 20 is detected, it is possible to easily determine whether the signal of the traffic light 20 has changed based on the motions of surrounding pedestrians, which may result in the effect of improving the efficiency of the mobile robot 100.

Meanwhile, the crosswalk crossing method by a mobile robot according to an embodiment of the present disclosure may be implemented in the form of computer-readable program instructions and stored in a non-transitory computer-readable recording medium, and the control program and target program according to an embodiment of the present disclosure may also be stored in a non-transitory computer-readable recording medium. A non-transitory computer-readable recording medium includes all types of recording devices in which data that may be read by a computer system is stored.

Program instructions recorded on the recording medium may be those specifically designed and configured for the present disclosure, or may be known and available to those skilled in the software field.

Examples of the non-transitory computer-readable recording medium include magnetic media such as a hard disk, a floppy disk, and a magnetic tape, optical media such as a CD-ROM and a DVD, magneto-optical media such as a floptical disk, and hardware devices specially configured to store and perform program instructions such as a ROM, a RAM, and a flash memory. In addition, the non-transitory computer-readable recording medium is distributed in computer systems connected through a network, so that computer-readable codes may be stored and executed in a distributed manner.

Examples of program instructions include not only machine language code such as that created by a compiler, but also high-level language code that may be executed by a device that electronically processes information using an interpreter, for example, a computer.

The hardware devices described above may be configured to operate as one or more software modules to perform the operations of the present disclosure, and vice versa.

The above description of the present disclosure is for illustrative purposes, and those skilled in the art to which the present disclosure pertains will understand that the present disclosure may be easily modified into other specific forms without changing the technical idea or essential features of the present disclosure. Therefore, the embodiments described above should be understood in all respects as illustrative and not restrictive. For example, each component described as unitary may be implemented in a distributed manner, and similarly, components described as distributed may also be implemented in a combined form.

The scope of the present disclosure is indicated by the appended claims rather than the detailed description above, and all changes or modified forms derived from the meaning and scope of the claims and their equivalent concepts should be construed as being included in the scope of the present disclosure.

### Industrial Applicability

The present disclosure may be used in a crosswalk crossing method by a mobile robot and a mobile robot.

## Claims

1. A crosswalk crossing method by a mobile robot, comprising:
detecting, by the mobile robot, a crosswalk;
detecting, by the mobile robot, a motion of at least one pedestrian within a predetermined range from the crosswalk;
determining, by the mobile robot, whether a traffic light of the crosswalk is a walking signal based on the detected motion of the at least one pedestrian; and
when it is determined that the traffic light is the walking signal, crossing, by the mobile robot, the crosswalk.

2. The crosswalk crossing method of claim 1, further comprising detecting, by the mobile robot, a traffic light at the crosswalk,
wherein a motion of a pedestrian is detected within a predetermined range centered on the crosswalk by the mobile robot, when no traffic light is detected.

3. The crosswalk crossing method of claim 1, wherein the determining of, by the mobile robot, whether the traffic light of the crosswalk is the walking signal, comprises:
detecting, by the mobile robot, whether at least one pedestrian who has been stationary starts to move; and
when the at least one pedestrian starts to move, determining, by the mobile robot, that the traffic light is the walking signal.

4. The crosswalk crossing method of claim 3, wherein the detecting of, by the mobile robot, whether the at least one pedestrian who has been stationary starts to move, comprises detecting, by the mobile robot, whether the at least one pedestrian moves along a crosswalk direction.

5. The crosswalk crossing method of claim 3, wherein the determining of, by the mobile robot, whether the traffic light of the crosswalk is the walking signal, comprises:
detecting, by the mobile robot, whether a plurality of pedestrians start to move; and
determining, by the mobile robot, when the movement of the plurality of pedestrians meets a predetermined standard, that the traffic light is the walking signal.

6. The crosswalk crossing method of claim 5, wherein the determining of, by the mobile robot, when the movement of the plurality of pedestrians meets the predetermined standard, that the traffic light is the walking signal, comprises:
determining, by the mobile robot, when pedestrians of a predetermined standard number or more start to move, that the traffic light is the walking signal; or
determining, by the mobile robot, when a proportion of pedestrians starting to move among a plurality of pedestrians is above a certain level, that the traffic light is the walking signal.

7. The crosswalk crossing method of claim 1, wherein the crossing of, by the mobile robot, the crosswalk, comprises:
stopping, by the mobile robot, crossing the crosswalk when the mobile robot fails to enter the crosswalk within a predetermined time after it is determined that the traffic light is the walking signal; and
waiting, by the mobile robot, for a next walking signal of the traffic light.

8. A computer program stored in a non-transitory computer-readable recording medium installed in a data processing device for performing the method of any one of claims 1 to 7.

9. A mobile robot comprising:
a driving part for driving of the mobile robot;
a controller for controlling driving of the driving part;
a detecting part for detecting a crosswalk and a traffic light; and
a motion detector for detecting a motion of a pedestrian,
wherein the motion detector is configured to, when the crosswalk is detected by the detecting part, detect a motion of at least one pedestrian within a predetermined range from the crosswalk, and
wherein the controller is configured to determine whether a traffic light of the crosswalk is a walking signal based on the motion of the at least one pedestrian detected by the motion detector, and
when it is determined that the traffic light is the walking signal, control the driving part to allow the mobile robot to cross the crosswalk.

10. The mobile robot of claim 9, wherein the motion detector is configured to detect whether at least one pedestrian who has been stationary starts to move, and
the controller is configured to, when at least one pedestrian starts to move, determine that the traffic light is the walking signal.

11. The mobile robot of claim 10, wherein the motion detector is configured to detect whether the at least one pedestrian detected by the motion detector moves along a crosswalk direction.

12. The mobile robot of claim 10, wherein the motion detector is configured to detect whether a plurality of pedestrians start to move, and
the controller is configured to, when the movement of the plurality of pedestrians detected by the motion detector meets a predetermined standard, determine that the traffic light is the walking signal.

13. The mobile robot of claim 12, wherein the controller is configured to:
when pedestrians of a predetermined standard number or more start to move, determine that the traffic light is the walking signal; or
when a proportion of pedestrians starting to move among a plurality of pedestrians is above a certain level, determine that the traffic light is the walking signal.

14. The mobile robot of claim 9, wherein the controller is configured to, when the mobile robot fails to enter the crosswalk within a predetermined time after it is determined that the traffic light is the walking signal, control the driving part to stop crossing the crosswalk and wait for a next walking signal of the traffic light.
